# EUROPEAN PATENT APPLICATION

(11) **EP 3 831 796 A1**
(43) Date of publication of application: **09.06.2021**
(21) Application number: 19840020.2
(22) Date of filing: 25.07.2019
(51) Int. Cl.: C04B 35/119, H01B 3/12, H05B 3/14

(54) **ALUMINOUS PORCELAIN AND CERAMIC HEATER**

(30) Priority: 27.07.2018 JP 2018141505
(71) Applicant: Kyocera Corporation, Kyoto-shi, Kyoto 612-8501 (JP)
(72) Inventor: WANG,Yucong, Kyoto-shi, Kyoto 612-8501 (JP)
(74) Representative: Viering, Jentschura & Partner mbB Patent- und Rechtsanwälte
(86) International application number: PCT/JP2019/029205
(87) International publication number: WO 2020/022425

(57) **Abstract**

An alumina crystal particle(s), a zirconia crystal particle(s), Ti, Mg, and Si are included, where, when the Ti is converted into TiO₂, the Mg is converted into MgO, and the Si is converted into SiO₂, a total content of the Ti, the Mg, and the Si is 1.4% by mass or greater, when zirconia that composes the zirconia crystal particle(s) is denoted by ZrO₂, a content of a rare-earth element relative to the ZrO₂ in the zirconia crystal particle(s) is 2 mol% or less in an oxide equivalent thereof, the zirconia crystal particle(s) include(s) at least one of a separate particle(s) with a maximum length of 1 µm or greater and an aggregated particle(s) with a maximum length of 1 µm or greater, and a total of ratios of the separate particle(s) with a maximum length of 1 µm or greater and the aggregated particle(s) with a maximum length of 1 µm or greater is 50% by volume or greater of a whole of the zirconia crystal particle(s).

## Description

### Field

The present disclosure relates to an alumina-based porcelain and a ceramic heater.

### Background

There is a heater for heating a semiconductor substrate, a heater of a carburetor of a kerosene fan heater, a hot-water heater, or a heater for heating that is integrated with a gas sensor such as an oxygen sensor. As such a heater, a ceramic heater is utilized. A ceramic heater has a structure where a metal heating element is buried in an insulation layer that uses an insulating ceramic(s). For an insulating ceramic(s), alumina is mainly used. In a case of alumina, a particle(s) of ZrO₂ may be dispersed in an alumina porcelain for a purpose of increasing a mechanical strength thereof.

For example, Patent Literature 1 discloses an alumina sintered substrate where ZrO₂ with 2 to 6 mol% of Y₂O₃ that is incorporated into a solid solution thereof is added to alumina and a sintering temperature is lowered.

Furthermore, there is a need for downsizing of a heater. Hence, a higher mechanical strength, and a durability at a high temperature, are desired for an insulating ceramic(s) that is/are used for a heater, in order to attain a high durability even for a compact component.

Patent Literature 2 discloses that ZrO₂ with a small particle size is added to alumina so as to increase a mechanical strength. In alumina that contains ZrO₂ with a small particle size, a ratio of a tetragonal crystal that is a metastable phase of ZrO₂ is high. Furthermore, phase transformation of ZrO₂ from a tetragonal crystal to a monoclinic crystal is readily caused when a stress is applied thereto. As a result, it is possible to obtain an alumina-based porcelain with a high mechanical strength.

### Citation List

### Patent Literature

Patent Literature 1: Japanese Patent Application Publication No. H03-223157
Patent Literature 2: Japanese Patent Application Publication No. 2007-2695524

### Summary

An alumina-based porcelain according to the present disclosure includes an alumina crystal particle(s), a zirconia crystal particle(s), Ti, Mg, and Si, wherein, when the Ti is converted into TiO₂, the Mg is converted into MgO, and the Si is converted into SiO₂, a total content of the Ti, the Mg, and the Si is 1.4% by mass or greater, when zirconia that composes the zirconia crystal particle(s) is denoted by ZrO₂, a content of a rare-earth element relative to the ZrO₂ in the zirconia crystal particle(s) is 2 mol% or less in an oxide equivalent thereof, the zirconia crystal particle(s) includes(s) at least one of a separate particle(s) with a maximum length of 1 µm or greater and an aggregated particle(s) with a maximum length of 1 µm or greater, and a total of ratios of the separate particle(s) with a maximum length of 1 µm or greater and the aggregated particle(s) with a maximum length of 1 µm or greater is 50% by volume or greater of a whole of the zirconia crystal particle(s).

A ceramic heater according to the present disclosure includes a heating element, and an insulating porcelain that covers the heating element, wherein the insulating porcelain is the alumina-based porcelain as described above.

### Description of Embodiments

An alumina-based porcelain according to the present disclosure includes an alumina crystal particle(s), a zirconia crystal particle(s), Ti, Mg, and Si. For the zirconia crystal particle(s), a content of a rare-earth element relative to zirconia is 2 mol% or less in an oxide equivalent thereof. In such a case, it is possible to provide lanthanoids (atomic numbers 57 to 71) other than Y (yttrium) as a rare-earth element. Providing a rare-earth element in an oxidation equivalent is a mole percentage at a time when a rare-earth element is denoted by an RE and when it is denoted by RE₂O₃. In such a case, for zirconia, a molecular weight at a time when it is denoted by ZrO₂ is used.

Furthermore, such an alumina-based porcelain includes Ti, Mg, and Si. For a total content of Ti, Mg, and Si, a total content at a time when each element is provided in an oxidation equivalent thereof is 1.4% by mass or greater. In such a case, a content of Ti is a mass at a time when it is denoted by TiO₂. A content of Mg is a mass at a time when it is denoted by MgO. A content of Si is a mass at a time when it is denoted by SiO₂.

Additionally, in a case of such an alumina-based porcelain, it is preferable that a total amount of alumina and zirconia is 93% by mass or greater. Herein, a content of alumina is a mass at a time when it is provided as Al₂O₃. A content of zirconia is a mass at a time when it is denoted by ZrO₂. Furthermore, for example, when alumina is converted into Al₂O₃ and zirconia is converted into ZrO₂, a ratio of an alumina and zirconia may be Al₂O₃: ZrO₂ = 95 :5 to 80: 20 in a mass ratio. In such a case, it is preferable that a zirconia crystal particle(s) to be selected include(s) a rare-earth element. It is possible to confirm a state where a zirconia crystal particle(s) include(s) a rare-earth element, by using an electron microscope that includes an elemental analyzer.

A zirconia crystal particle(s) may exist as a separate particle(s), that is, a separate zirconia crystal particle(s), among alumina crystal particles or may exist as an aggregated particle(s) in a state where two or more zirconia crystal particles contact at least parts thereof.

Furthermore, such an alumina-based porcelain includes at least one of a zirconia crystal particle(s) that is/are provided as a separate particle(s) with a maximum length of 1 µm or greater and a zirconia crystal particle(s) that is/are provided as an aggregated particle(s) with a maximum length of 1 µm or greater. In such a case, it is preferable that, among a zirconia crystal particle(s) that is/are included in an alumina-based porcelain, a total of ratios of a zirconia separate particle(s) with a maximum length of 1 µm or greater and a zirconia aggregated particle(s) with a maximum length of 1 µm or greater that are combined is 50% by volume or greater.

It is preferable that a zirconia crystal particle(s) among alumina crystal particles include(s) a partially stabilized ZrO₂ crystal particle(s) that include(s) a metastable tetragonal crystal. Thereby, even if a crack is generated in an alumina-based porcelain, it is possible to suppress development of such a crack. In such a case, it is preferable that a zirconia crystal particle(s) that cause(s) phase transition from a tetragonal crystal to a monoclinic crystal exist(s). As phase transition of a zirconia crystal particle(s) from a tetragonal crystal to a monoclinic crystal is caused, a volume of the zirconia crystal particle(s) is increased. Stress concentration at a tip of a crack is relaxed by a volume change of such a zirconia crystal particle(s). Thus, it is possible to suppress development of a crack that is generated in an alumina-based porcelain. In such a case, a stability of a zirconia crystal particle(s) of a tetragonal crystal is increased as increasing an amount of a rare-earth element or the like that is incorporated in a solid solution thereof.

However, as a stability of a tetragonal crystal is excessively increased, phase transition to a monoclinic crystal is not readily caused at a stress concentration part at a tip of a crack. As a result, it may be impossible to increase a mechanical strength. In such a case, it is preferable that an amount of a rare-earth element that is incorporated in a solid solution of a zirconia crystal particle(s) is 2 mol% or less in an oxide equivalent. Furthermore, it is preferable that an amount of a rare-earth element that is incorporated in a solid solution is selected in a range where it is possible to stabilize a tetragonal crystal, depending on a particle size(s) of a zirconia crystal particle(s).

As a stability of a zirconia crystal particle(s) of a tetragonal crystal is increased as decreasing a particle size(s) thereof. Hence, it is possible to increase a ratio of a tetragonal crystal by finely graining a zirconia crystal particle(s). Furthermore, a dispersibility of a zirconia crystal particle(s) in an alumina-based porcelain is improved. Additionally, in a case where a zirconia crystal particle(s) is/are a fine particle(s), an amount of a rare-earth element or the like that is incorporated in a solid solution may be decreased or a zirconia crystal particle(s) of a metastable tetragonal crystal where a rare-earth element or the like is not incorporated in a solid solution may be included. However, as a stability of a tetragonal crystal is excessively increased as described above, phase transition to a monoclinic crystal at a stress concentration part at a tip of a crack is not readily caused and it may be impossible to improve a mechanical strength.

A zirconia crystal particle(s) that is/are included in an alumina-based porcelain according to the present disclosure include(s) a separate particle(s) with a maximum length of 1 µm or greater or an aggregated particle(s) with a maximum length of 1 µm or greater. As a maximum length of a zirconia crystal particle(s) is 1 µm or greater, phase transition from a tetragonal crystal to a monoclinic crystal is readily caused and it is more difficult to break an alumina-based porcelain. In regard to such an effect, phase transition from a tetragonal crystal to a monoclinic crystal is readily caused not only for a separate zirconia crystal particle(s) but also for an aggregated particle(s) where two or more zirconia crystal particles contact at least parts thereof. Furthermore, as a certain amount or more of a separate particle(s) with a maximum length of 1 µm or greater or an aggregated particle(s) with a maximum length of 1 µm or greater as described above exists, slippage of phase interfaces of alumina and zirconia at a high temperature is not readily caused and a strength of an alumina-based porcelain at a high temperature is improved.

In particular, in a case where a zirconia crystal particle(s) is/are included in an alumina-based porcelain, it is possible to provide a flexural strength of 800 MPa or greater at a room temperature (25°C). Furthermore, it is possible to provide a flexural strength of 600 MPa or greater at a high temperature (800°C). It is preferable that a zirconia crystal particle(s) herein include(s) a rare-earth element at a proportion of 2 mol% or less. Furthermore, it is preferable that a zirconia crystal particle(s) is/are at least one of a separate particle(s) with a maximum length of 1 µm or greater and an aggregated particle(s) with a maximum length of 1 µm or greater. In such a case, it is preferable that a proportion of at least one of a separate particle(s) with a maximum length of 1 µm or greater and an aggregated particle(s) with a maximum length of 1 µm or greater to be included is 50% by volume or greater relative to a whole of a zirconia crystal particle(s) that include(s) a rare-earth element.

An average particle size of a zirconia crystal particle(s) in an alumina-based porcelain may be, for example, 0.5 µm or greater and 1.5 µm or less. An aggregated particle(s) of a zirconia crystal particle(s) may be regarded as substantially one particle. An average particle size of an aggregated particle(s) may be 0.5 µm or greater and 2.0 µm or less, and additionally, a maximum length of an aggregated particle(s) may be 10 µm or less.

An average particle size of an alumina crystal particle(s) may be, for example, 1.5 µm or greater and 5 µm or less.

Additionally, a maximum size of each kind of particle that is included in an alumina-based porcelain is preferably 15 µm. That is because, if a maximum size of each kind of particle is 15 µm or less, it is difficult to provide an origin of breakage. Herein, each kind of particle is an alumina crystal particle(s) and a zirconia crystal particle(s). A zirconia crystal particle(s) include(s) a separate particle(s) and an aggregated particle(s) as described above.

An alumina-based porcelain includes Ti, Mg, and Si. When Ti is converted into TiO₂, Mg is converted into MgO, and Si is converted into SiO₂, it is preferable that a total content of Ti, Mg, and Si is 1.4% by mass or greater. Additionally, as referring to an equilibrium diagram, an eutectic temperature of such oxides, that is, TiO₂, MgO, and SiO₂ is 1300°C or lower. Hence, when a metal that is provided as a heating element of a heater and an alumina-based porcelain that includes such components are fired simultaneously, at least one kind of component among Al, Zr, Ti, Mg, Si, and a rare-earth element that are components of the alumina-based porcelain is readily diffused in the heating element, in some cases, in a state of a metal oxide(s). Thus, it is possible to increase a bonding strength between an alumina-based porcelain and a heating element.

Furthermore, as each of Ti, Mg, and Si is included as an oxide thereof, it is possible to particle-grow a zirconia crystal particle(s) that is/are included in an alumina-based porcelain. For example, even if a zirconia powder with an average particle size of 1 µm or less is used as a raw material powder, a zirconia separate particle(s) with a maximum length of 1 µm or greater or a zirconia aggregated particle(s) with a maximum length of 1 µm or greater is readily formed in an alumina-based porcelain.

A content of Ti may be 0.5% by mass or greater and 1.0% by mass or less in an oxide (TiO₂) equivalent. A content of Mg may be 0.2% by mass or greater and 4.0% by mass or less in an oxide (MgO) equivalent. A content of Si may be 0.7% by mass or greater and 1.4% by mass or less in an oxide (SiO₂) equivalent. A total content of Ti, Mg, and Si may be 6.4% by mass or less, in particular, 5.0% by mass or less in a proportion at a time when Ti is converted into TiO₂, Mg is converted into MgO, and Si is converted into SiO₂. As a total content of Ti, Mg, and Si in equivalents as described above is 6.4% by mass or less, excessive particle growth of a zirconia crystal particle(s) is suppressed, so that it is possible to provide an alumina-based porcelain that has a high mechanical strength.

Furthermore, an alumina-based porcelain may have a porosity of 1.0% or less. As a porosity is 1.0% or less, it is possible to reduce a pore(s) that is/are provided as an origin(s) of mechanical breakage. Thus, it is possible to obtain an alumina-based porcelain that has a high mechanical strength.

For an alumina-based porcelain, a total content of Ca, Ba, Sr, Zn, Mn, and Ce may be 300 ppm or less, when Ca is converted into CaO, Ba is converted into BaO, Sr is converted into SrO, the aforementioned Mn is converted into MnO, and the aforementioned Ce is converted into Ce₂O₃. As it is 300 ppm or less in total at a time when such elements are converted into oxides thereof, it is possible to further increase a fractural strength of an alumina-based porcelain at a high temperature. Additionally, a part of Ca, Ba, Sr, Zn, Mn, and Ce may be used as a solid solution element(s) of a partially stabilized zirconia. Furthermore, an alumina crystal particle(s) that is/are a main component and/or oxides that include Ti, Mg, and Si that are aid components may react so as to form a grain boundary phase. A grain boundary phase that includes each of Ca, Ba, Sr, Zn, Mn, and Ce as a metal oxide may be softened at 700°C or higher. As a total content of Ca, Ba, Sr, Zn, Mn, and Ce is 300 ppm or less in oxide equivalents thereof, it is possible to provide an alumina-based porcelain with a high mechanical strength at a high temperature. Herein, ppm denotes a mass ratio of an order of 1 x 10⁻⁶ in an abbreviated manner.

An rare-earth element that is included in a zirconia crystal particle(s) may be Y. For Y, an effect of stabilizing a tetragonal crystal is particularly high among rare-earth elements that are used as solid solution elements for a partially stabilized zirconia. Additionally, a zirconia crystal particle(s) that include(s) 2 mol% of Y in a Y₂O₃ equivalent means that 2 mol% of Y₂O₃ relative to ZrO₂ is included.

A ratio of a zirconia crystal particle(s) of a monoclinic crystal that is/are included in a zirconia crystal particle(s) may be 25% or less. As a ratio of a zirconia crystal particle(s) of a monoclinic crystal is 25% or less, a ratio of a zirconia crystal particle(s) of a tetragonal crystal is increased, so that an effect of increasing a mechanical strength of an alumina-based porcelain that is caused by phase transformation from a tetragonal crystal to a monoclinic crystal is further increased.

For an alumina-based porcelain, a three-point fractural strength at a room temperature (25°C) in conformity with JIS R 1601: 2008 may be 800 MPa or greater. As a three-point fractural strength at a room temperature is 800 MPa or greater, it is possible to obtain a ceramic heater with a high mechanical strength, an excellent reliability, and a high vibration resistance. In such a case, a proportion of a volume of an alumina-based porcelain (an insulating porcelain) in an alumina ceramic heater may be approximately half (40% by volume or greater and 60% by volume or less).

For an alumina-based porcelain, a three-point fractural strength at a high temperature in conformity with JIS R 1604: 2008 may be 600 MPa or greater. In such a case, it is possible to illustrate a temperature of 800°C or higher as a test temperature. For example, as a three-point fractural strength at a temperature of 800°C is 600 MPa or greater, a resistance against a test of leaving to stand (holding) at a high temperature or a temperature cycle test is increased. Also in such a case, a proportion of a volume of an alumina-based porcelain (an insulating porcelain) in an alumina ceramic heater may be approximately half (40% by volume or greater and 60% by volume or less).

A ceramic heater includes a heating element and an insulating porcelain that covers such a heating element. Herein, a heating element is formed of a metal material. As an alumina-based porcelain as described above is used as an insulating porcelain, it is possible to obtain a ceramic heater with a high adhesion property between a heating element and the insulating porcelain (that may be reworded as a bonding property or a joining property). Also in such a case, a proportion of a volume of an alumina-based porcelain in an alumina ceramic heater may be approximately half (40% by volume or greater and 60% by volume or less). Thus obtained ceramic heater has a high resistance against vibration and/or a temperature cycle.

A ceramic heater may be, for example, a ceramic heater with a flat plate shape where a metal heating element is interposed between two insulating porcelains. Furthermore, it may be a ceramic heater with a cylindrical shape or a columnar shape that has a heating element between an inner cylinder and an outer cylinder where any thereof is an insulating porcelain. Furthermore, a ceramic heater may include a variety of gas sensors in an inside or an outside thereof.

A ceramic heater is not limited to a configuration as described above. In other words, although a heating element and an insulating porcelain that covers such a heating element are included, it may have any other configuration as long as the insulating porcelain is an alumina-based porcelain as described above. For example, a component other than a heating element and a gas sensor may be included.

An alumina-based porcelain as described above may be fabricated by, for example, a method as provided below.

For example, a zirconia powder with an average particle size of 0.1 µm or greater and 0.3 µm or less and an alumina powder with an average particle size of 0.6 µm or greater and 3.0 µm or less are prepared as main raw material powders. It is preferable that a zirconia powder is a partially stabilized zirconia that includes 1 to 2 mol% of a rare-earth element. A compounding ratio of an alumina powder and a zirconia powder may be provided as, for example, alumina powder: zirconia powder = 95: 5 to 80: 20 in a mass ratio.

Moreover, a titanium oxide powder, a magnesium oxide powder (where a magnesium carbonate powder or a magnesium hydroxide powder may be used instead of the magnesium oxide powder), and a silicon oxide powder are prepared as sintering aids. For a titanium oxide powder, a magnesium oxide powder, a magnesium carbonate powder, a magnesium hydroxide powder, and a silicon oxide powder, it is preferable that a purity is 99% by mass or greater and an average particle size is 2 µm or less. It is preferable that an average particle size is 0.1 µm or greater and 2 µm or less. Herein, each of a main raw material powder and sintering aids as described above may conveniently be denoted as follows. Alumina is Al₂O₃, zirconia is ZrO₂, titanium oxide is TiO₂, magnesium oxide is MgO, magnesium carbonate is MgCO₃, magnesium hydroxide is Mg(OH)₂, and silicon oxide is SiO₂. Hereinafter, latter notations may be used.

It is possible to illustrate a compounding composition of a main raw material powder and sintering aids, for example, as follows. When an Al₂O₃ powder, a ZrO₂ powder, and sintering aids are provided as 100% by mass in total, TiO₂ is provided as 0.5% by mass or greater and 1.0% by mass or less, MgO is provided as 0.2% by mass or greater and 4.0% by mass or less, and SiO₂ is provided as 0.7% by mass or greater and 1.4% by mass or less. A total thereof is provided as 1.4% by mass or greater. A total of TiO₂, MgO, and SiO₂ may be provided as 6.0% by mass or less, in particular, 5.0% by mass or less.

An Al₂O₃ powder, a ZrO₂ powder, a TiO₂ powder, an MgO powder, and an SiO₂ powder that are compounded at predetermined ratios are wetly mixed by, for example, a ball mill and dried, and subsequently, a molded body may be fabricated by using a well-known molding method such as press molding, tape molding, casting molding, or injection molding. For example, a cold isostatic press (CIP) process may be executed for an obtained molded body.

An obtained molded body is degreased, and fired, for example, at a temperature of 1400°C or higher and 1600°C or lower in air atmosphere, depending on a composition and amounts of aids, so that it is possible to obtain an alumina-based porcelain.

A heating element may be formed by using, for example, an electrically conductive paste where predetermined amounts of a tungsten (W) powder and an Al₂O₃ powder are compounded. An electrically conductive paste is printed on a surface of a molded body that is provided as an alumina-based porcelain. An electrically conductive paste is embedded in a via hole that is provided in a molded body as needed. Thus, a conductor pattern is formed. Subsequently, a conductor pattern and a molded body are fired simultaneously. Herein, a firing atmosphere may be a reducing atmosphere.

As a fine ZrO₂ powder is thus used and firing is executed together with sintering aids as described above, a zirconia crystal particle(s) is/are particle-grown, so that it is possible to form a separate particle(s) with a maximum length of 1 µm or greater or an aggregated particle(s) with a maximum length of 1 µm or greater. If such a method is executed, it is possible to increase flexural strengths (three-point flexural strengths) of an alumina-based porcelain at a room temperature (25°C) and a high temperature (800°C) relative to a case where a crystal structure is provided where a zirconia crystal particle(s) with a particle size(s) of 1 µm or less is/are dispersed uniformly.

Furthermore, as TiO₂, MgO, and SiO₂ are used as sintering aids, a part of components of an alumina-based porcelain, that is, at least one kind of component among Al₂O₃, ZrO₂, TiO₂, MgO, SiO₂, and a rare-earth element substance is readily diffused toward a metal side of a heating element. Thus, it is possible to cause a heating element to adhere to an alumina-based porcelain tightly. Practical Examples

An Al₂O₃ powder with an average particle size (D50) of 0.6 µm and a purity of 99.8% by mass and a ZrO₂ powder with an average particle size (D50) of 0.1 µm where a predetermined amount of Y₂O₃ was incorporated into a solid solution thereof were prepared. Furthermore, a TiO₂ powder, an SiO₂ powder, and MgCO₃ powder where a purity of any thereof was 99.8% or higher were prepared as sintering aids. Additionally, for sample No. 4, an SrCO₃ powder was added in addition to a raw material as described in Table 1.

Predetermined amounts of them were compounded and cellulose as a binder and toluene as a solvent were added and mixed thereto so as to prepare a slurry. A composition of ZrO₂ in Table 1 is a ratio at a time when an Al₂O₃ powder and a ZrO₂ powder are provided as 100% by mass in total. Compositions of TiO₂, MgO, and SiO₂ in Table 1 are ratios at a time when a total of Al₂O₃, ZrO₂ that includes a rare-earth element (Y), TiO₂, MgO, and SiO₂ is provided as 100% by mass.

An obtained slurry was sheet-molded by a doctor blade method and dried so as to fabricate a green sheet with a thickness of 0.4 mm. Then, 15 layers of obtained green sheets were laminated so as to obtain a molded body with a thickness of 6 mm.

After an obtained molded body was cut into a predetermined shape and a degreasing process was executed for 10 hours in air atmosphere at 500°C, firing was executed for 5 hours in air atmosphere at a maximum temperature as illustrated in Table 1 so as to obtain an alumina-based porcelain. For sample No. 13, a holding time at a maximum temperature for firing was set at 2 hours.

**Table 1**

| Sample No. | ZrO₂ | Y₂O₃ | TiO₂ | MgO | SiO₂ | Ti, Mg, Si Total | Firing temperature |
|---|---|---|---|---|---|---|---|
| | mass% | mol% | mass% | mass% | mass% | mass% | °C |
| 1 | 5 | 2 | 0.8 | 1.0 | 1.0 | 2.8 | 1500 |
| 2 | 10 | 2 | 0.8 | 1.0 | 1.0 | 2.8 | 1500 |
| 3 | 15 | 1 | 1.0 | 1.0 | 0.7 | 2.7 | 1450 |
| 4 | 15 | 1 | 1.0 | 1.0 | 0.7 | 2.7 | 1450 |
| 5 | 15 | 2 | 0.5 | 0.2 | 0.7 | 1.4 | 1600 |
| 6 | 15 | 2 | 0.5 | 0.2 | 0.5 | 1.2 | 1500 |
| 7 | 15 | 2 | 0.8 | 1.0 | 1.0 | 2.8 | 1500 |
| 8 | 15 | 2 | 1.0 | 2.2 | 1.2 | 4.4 | 1450 |
| 9 | 15 | 2 | 1.0 | 4.0 | 1.4 | 6.4 | 1400 |
| 10 | 15 | 2 | 1.2 | 3.8 | 2.0 | 7.0 | 1400 |
| 11 | 15 | 3 | 1.0 | 1.0 | 0.7 | 2.7 | 1450 |
| 12 | 20 | 2 | 0.8 | 1.0 | 1.0 | 2.8 | 1500 |
| 13 | 15 | 1 | 1.0 | 1.0 | 0.7 | 2.7 | 1450 |

A composition of an obtained alumina-based porcelain was confirmed by X-ray fluorescence (XRF). Compositions of Al₂O₃, ZrO₂, TiO₂, MgO, and SiO₂ coincided with those at a time of preparation within an error range. Furthermore, contents of Ca, Ba, Sr, Zn, Mn, and Ce as illustrated as others were confirmed by high-frequency inductively coupled plasma emission spectrometry (ICP). For fabricated samples (sample Nos. 1 to 13), contents of Ca, Ba, Sr, Zn, Mn, and Ce of any sample were 400 ppm or less.

Particle sizes of alumina crystal particles and particle sizes of zirconia crystal particles were confirmed as follows. After a cross section of an alumina-based porcelain was mirror-polished, heat treatment was executed for 10 minutes at a temperature that was 50°C to 100°C lower than a firing temperature in Table 1 so as to etch a grain boundary. A photograph of a cross section of an etched grain boundary was taken at 3000-fold magnification by using a scanning electron microscope. An obtained photograph of a cross section was image-analyzed so as to calculate an average particle size of 50 particles for each of alumina crystal particles and zirconia crystal particles based on equivalent circles thereof. Additionally, an average particle size of zirconia crystal particles was calculated while an aggregated particle thereof was regarded as one particle. Furthermore, a maximum length of zirconia crystal particles was measured by using a photograph of a cross section, and volume ratios of separate particles with a maximum length of 1µm or greater and aggregated particles with a maximum length of 1µm or greater was calculated from area ratios thereof. Additionally, as a porosity of an obtained alumina-based porcelain was measured by image analysis of a photograph of a cross section, a porosity for any sample was 1% or less.

A ratio of a monoclinic crystal of zirconia crystal particles was calculated by analyzing an X-ray diffraction (CuKα) pattern of an alumina-based porcelain. For a monoclinic crystal, diffraction peaks for a (11-1) plane with 2θ near 28.3° and a (111) plane near 31.5° were used, and for a tetragonal crystal, a diffraction peak for a (111) plane with 2θ near 30.2° was used. A percentage of a diffraction intensity as described above for a monoclinic crystal in a sum of diffraction intensities as described above for the monoclinic crystal and a tetragonal crystal was provided as a ratio of a monoclinic crystal in zirconia.

A flexural strength of an alumina-based porcelain was evaluated by fabricating a sample for mechanical strength measurement with a predetermined shape from an obtained alumina-based porcelain and measuring three-point flexural strengths at a room temperature (25°C) and 800°C in conformity with JIS R 1601: 2008 and JIS R 1604: 2008. Results are illustrated in Table 2.

**Table 2**

| Sample No. | Average particle size | | ZrO₂ | | others | Three-point flexural strength | |
|---|---|---|---|---|---|---|---|
| | Al₂O₃ | ZrO₂ | Proportion of maximum length of 1 µm or greater | Monoclinic crystal ratio | Ca, Ba, Sr, Zn, Mn, Ce | Room temperature | 800°C |
| | µm | µm | volume% | 0.0 | ppm | MPa | MPa |
| 1 | 3.3 | 0.7 | 50 | 7 | 120 | 805 | 620 |
| 2 | 2.9 | 0.9 | 54 | 11 | 120 | 825 | 643 |
| 3 | 1.9 | 1.3 | 57 | 21 | 100 | 855 | 653 |
| 4 | 2.0 | 1.1 | 54 | 20 | 450 | 838 | 491 |
| 5 | 4.2 | 1.5 | 53 | 25 | 30 | 814 | 669 |
| 6 | 2.6 | 0.8 | 40 | 15 | 40 | 660 | 548 |
| 7 | 2.4 | 1.2 | 59 | 17 | 110 | 836 | 633 |
| 8 | 2.3 | 1.5 | 66 | 24 | 180 | 822 | 625 |
| 9 | 1.8 | 1.3 | 61 | 19 | 300 | 865 | 617 |
| 10 | 2.5 | 1.6 | 78 | 29 | 270 | 800 | 601 |
| 11 | 1.9 | 1.2 | 54 | 5 | 100 | 745 | 515 |
| 12 | 2.1 | 1.4 | 63 | 23 | 90 | 877 | 646 |
| 13 | 1.8 | 0.4 | 0 | 4 | 30 | 620 | 420 |

For sample Nos. 1 to 5, 7 to 10, and 12, 50% by volume or more of zirconia separate particles with a maximum length of 1 µm or greater or zirconia aggregated particles with a maximum length that was 1 µm or greater where a rare-earth element was incorporated in a solid solution were included and a three-point flexural strength at a room temperature (25°C) was 800 MPa or greater. Furthermore, for sample Nos. 1 to 3, 5, 7 to 10, and 12, a total content of Ca, Ba, Sr, Zn, Mn, and Ce was 300 ppm or less in an oxide equivalent and a three-point flexural strength at a high temperature (800°C) was 600 MPa or greater.

Additionally, a result of a sample where a molded body with a composition that was identical to that of sample No. 3 was fabricated at an identical temperature for a holding time of 2 hours is illustrated as sample No. 13 in Table 2. An alumina-based porcelain for sample No. 13 included none of zirconia separate particles with a maximum length of 1 µm or greater and zirconia aggregated particles with a maximum length that was 1 µm or greater. For an alumina-based porcelain for sample No. 13, a three-point flexural strength at a room temperature (25°C) was 620 MPa and a three-point flexural strength at a high temperature (800°C) was 42 MPa, where they were lower than those of the other samples (sample Nos. 1 to 12). It was considered that this was because zirconia crystal particles in an alumina-based porcelain for sample No. 13 were particles that were finer than those of an alumina-based porcelain for another sample. It was considered that a stability of a tetragonal crystal was high at a room temperature and hence phase transformation under a stress was not readily caused. Furthermore, it was considered that slippage of a grain boundary between an alumina crystal particle and a zirconia crystal particle or between both zirconia crystal particles at a high temperature was readily caused. As a result, it was considered that three-point flexural strengths at a room temperature and a high temperature (800°C) were decreased.

## Claims

1. An alumina-based porcelain that includes an alumina crystal particle(s), a zirconia crystal particle(s), Ti, Mg, and Si, wherein,
when the Ti is converted into TiO₂, the Mg is converted into MgO, and the Si is converted into SiO₂, a total content of the Ti, the Mg, and the Si is 1.4% by mass or greater,
when zirconia that composes the zirconia crystal particle(s) is denoted by ZrO₂, a content of a rare-earth element relative to the ZrO₂ in the zirconia crystal particle(s) is 2 mol% or less in an oxide equivalent thereof,
at least one of a separate particle(s) with a maximum length of 1 µm or greater and an aggregated particle(s) with a maximum length of 1 µm or greater is included therein, and
a total of ratios of the separate particle(s) with a maximum length of 1 µm or greater and the aggregated particle(s) with a maximum length of 1 µm or greater is 50% by volume or greater of a whole of the zirconia crystal particle(s).

2. The alumina-based porcelain according to claim 1, wherein a total content of Ca, Ba, Sr, Zn, Mn, and Ce is 300 ppm or less when the Ca is converted into CaO, the Ba is converted into BaO, the Sri is converted into SrO, the Mn is converted into MnO, and the Ce is converted into Ce₂O₃.

3. The alumina-based porcelain according to claim 1 or 2, wherein the rare-earth element is Y.

4. The alumina-based porcelain according to any of claims 1 to 3, wherein a ratio of a monoclinic crystal that is included in the zirconia crystal particle(s) is 25% or less.

5. The alumina-based porcelain according to any of claims 1 to 4, wherein a three-point flexural strength thereof at a room temperature is 800 MPa or greater.

6. The alumina-based porcelain according to any of claims 1 to 5, wherein a three-point flexural strength thereof at 800°C is 600 MPa or greater.

7. A ceramic heater, comprising:
a heating element; and
an insulating porcelain that covers the heating element, wherein
the insulating porcelain is the alumina-based porcelain according to any of claims 1 to 6.
